(19) Europäisches Patentamt
European Patent Office
Office européen des brevets

(11) EP 2 120 376 A1

(12) EUROPEAN PATENT APPLICATION
published in accordance with Art. 153(4) EPC

(43) Date of publication:
18.11.2009 Bulletin 2009/47

(51) Int Cl.:
*H04J 11/00* (2006.01)

(21) Application number: 07737848.7

(22) Date of filing: 06.03.2007

(86) International application number:
PCT/JP2007/054301

(87) International publication number:
WO 2008/107972 (12.09.2008 Gazette 2008/37)

(84) Designated Contracting States:
AT BE BG CH CY CZ DE DK EE ES FI FR GB GR
HU IE IS IT LI LT LU LV MC MT NL PL PT RO SE
SI SK TR

(71) Applicant: Mitsubishi Electric Corporation
Chiyoda-ku
Tokyo 100-8310 (JP)

(72) Inventor: USUI, Tsutomu
Tokyo 100-8310 (JP)

(74) Representative: Pfenning, Meinig & Partner GbR
Patent- und Rechtsanwälte
Theresienhöhe 13
80339 München (DE)

(54) **COMMUNICATION DEVICE AND COMMUNICATION SYSTEM**

(57) A communication device according to the present invention performs communications by an OFDMA system. The communication device includes a zone-boosting-amount calculating unit (14) that obtains a segment number calculated in a synchronization process, obtains a sub-channel corresponding to the segment number by referring to a predetermined relationship between sub-channels and segment numbers, and calculates an amount of zone boosting based on an average power of a preamble and an average power of pilot subcarriers included in the sub-channel. The communication device estimate a transmission path after correcting a power value of a received signal based on calculated amount of zone boosting, and perform demodulation.

FIG.1

**Description**

TECHNICAL FIELD

The present invention relates to a communication device and a communication system that perform communications by an OFDMA (Orthogonal Frequency Division Multiple Access) system.

BACKGROUND ART

An OFDMA system is available as a communication system that allows multiple accesses. One example of a conventional wireless communication system that employs the OFDMA system is described in Nonpatent Literature 1 and Nonpatent Literature 2 mentioned below. As described in Nonpatent Literature 1, in an OFDMA system in IEEE 802.16, the allocated frequency band is divided into plural sub-channels, and the sub-channels are allocated to users. Communications are performed between a base station and a terminal after completion of allocation of the sub-channels.

One example of a DL (Down-Link) sub-frame of the OFDMA system in IEEE 802.16 is explained below. In the DL sub-frame of the OFDMA system in IEEE 802.16, a preamble is inserted in the header OFDMA symbol (called a 0-th OFDMA symbol), and FCH (Frame Control Header), DL-MAP, and a DL burst (this can be in plural) are allocated to the first and the subsequent OFDMA symbols. While DL-MAP is usually allocated only to the first and the second OFDMA symbols, it is sometimes allocated even to the third and the subsequent OFDMA symbols when there are many bits. A DL burst is usually transmitted by a plural number, and is, therefore, also allocated to the third and the subsequent OFDMA symbols.

A sub-frame can be divided into plural zones. Power adjustment called boosting (hereinafter, "zone boosting") unique to each zone is performed to data and a pilot sub-carrier in each zone. An example that a sub-frame is configured by plural zones is explained here. In this explanation, a zone used in DL is called a DL zone, and a first zone following the preamble is called a first DL zone. FCH, DL-MAP, and a DL burst are included in the first DL zone (DL burst may not be included in the first DL zone).

On the other hand, when IIR (Infinite Impulse Response) filtering is applied in performing a transmission-path estimating process at a receiving device, a difference in amount of zone boosting in each zone needs to be corrected. The amount of zone boosting in each zone can be calculated from information contained in FCH. Information as to whether a zone is exceptional in not performing zone boosting is contained in DL-MAP. The correct amount of zone boosting in each zone can be calculated by analyzing FCH and DL-MAP. Therefore, it is a common procedure to calculate the amount of zone boosting by analyzing FCH and DL-MAP, and perform the above correction by using the calculated amount of zone boosting.

While zone boosting is not performed in the preamble, zone boosting is performed in the first DL zone to which the first and the second OFDMA symbols belong. Therefore, when performing IIR filtering to a symbol included in the first DL zone, correction needs to be performed by using the amount of zone boosting in the first DL zone. However, the amount of zone boosting is unknown at this time because FCH is yet to be analyzed. Consequently, PSK (Phase Shift Keying) modulation such as QPSK (Quadrature Phase Shift Keying) modulation is used for the first and the second OFDMA symbols. When the PSK modulation is used in this way, demodulation and decoding can be performed without performing correction of the amount of zone boosting, although there is some characteristic degradation.

Nonpatent Literature 1: IEEE Std 802.16-2004, 2004

Nonpatent Literature 2: IEEE Std 802.16e/D12, 2005

DISCLOSURE OF INVENTION

PROBLEM TO BE SOLVED BY THE INVENTION

However, the above conventional technique has the following problems. Because the amount of zone boosting is calculated by analyzing FCH and DL-MAP containing zone boosting information, and because the calculated amount of zone boosting is used for the transmission-path estimating process, processes at a transmission-path estimating unit and thereafter cannot be performed until when data analysis of OFDMA symbols of FCH and DL-MAP is completed. Because the processes at the transmission-path estimating unit and subsequent units needs to be performed again after completing the data analysis of the OFDMA symbol of FCH, a processing delay occurs. When DL-MAP extends to the third and subsequent OFDMA symbols, the processing delay becomes larger than that when DL-MAP is included in the first and the second OFDMA symbols.

Furthermore, in the above conventional technique, because FCH and DL-MAP containing the zone boosting information are demodulated and decoded without using the amount of zone boosting, precision of transmission path estimation is poor.

Moreover, in the above conventional technique, the first and the second OFDMA symbols are demodulated based on an assumption that these OFDMA symbols are PSK modulated in advance. Therefore, it is not possible to apply a modulation system that causes the first and the second OFDMA symbols to have information in an amplitude direction as well. For example, a DL burst using a QAM (Quadrature Amplitude Modulation) modulation cannot be allocated to the second OFDMA symbol.

The present invention has been achieved in view of the above problems, and an object of the invention is to obtain a communication device and a communication system having a shorter processing delay and improved precision of transmission path estimation, by estimating an amount of zone boosting in each OFDMA symbol and by correcting based on the amount of zone boosting by IIR filtering.

MEANS FOR SOLVING PROBLEM

To solve the above problems and to achieve the above objects, according to an aspect of the present invention, there is provided a communication device that performs communications by an OFDMA system. The communication device includes a zone-boosting-amount calculating unit configured to obtain a segment number calculated in a synchronization process, obtain a sub-channel corresponding to the segment number by referring to a predetermined relationship between sub-channels and segment numbers, and calculate an amount of zone boosting based on average power of a preamble and an average power of pilot sub-carriers included in the sub-channel; and a demodulating unit configured to estimate a transmission path after correcting a power value of a received signal based on calculated amount of zone boosting, and perform demodulation.

EFFECT OF THE INVENTION

Because the communication device and the communication system according to the present invention calculate an amount of zone boosting based on the own OFDMA symbol, a processing delay can be decreased and precision of transmission path estimation can be improved.

BRIEF DESCRIPTION OF DRAWINGS

[Fig. 1] Fig. 1 is an example of a functional configuration of a communication device according to a first embodiment of the present invention.
[Fig. 2] Fig. 2 is a configuration example of a communication system according to the first embodiment of the present invention.
[Fig. 3] Fig. 3 is an example of a DL sub-frame.

EXPLANATIONS OF LETTERS OR NUMERALS

| | |
|---|---|
| 1 | antenna |
| 2 | synchronization processing unit |
| 3 | GI deleting unit |
| 4 | FFT unit |
| 5 | transmission-path estimating unit |
| 6 | equalizing unit |
| 7 | de-permutation unit |
| 8 | de-mapping unit |
| 9 | demodulating unit |
| 10 | de-interleave processing unit |
| 11 | decoding processing unit |
| 12 | de-randomizing unit |
| 13 | data analyzing unit |
| 14 | zone-boosting-amount calculating unit |
| 20-1, 20-2 | MS |
| 30 | BS |

BEST MODE(S) FOR CARRYING OUT THE INVENTION

Exemplary embodiments of a communication device and a communication system according to the present invention will be explained below in detail with reference to the accompanying drawings. The present invention is not limited to the embodiments.

First embodiment.

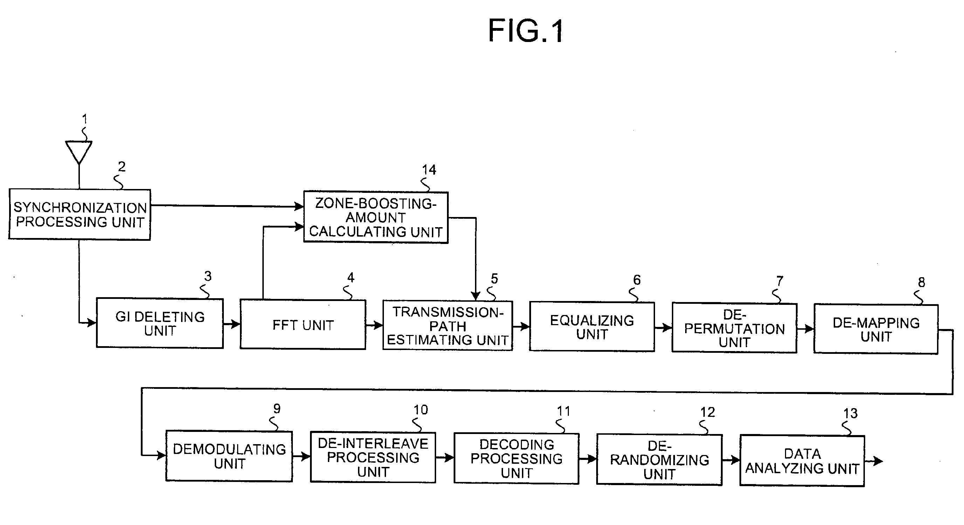

Fig. 1 is an example of a functional configuration of a communication device according to a first embodiment of the present invention. As shown in Fig. 1, the communication device according to the present embodiment includes an antenna 1 that receives user data; a synchronization processing unit 2 that performs a synchronization process; a GI (Guard Interval) deleting unit 3 that deletes a guard interval from a signal received by the antenna 1; an FFT (Fast Fourier Transform) unit 4 that Fourier transforms a signal after deletion of the guard interval; a transmission-path estimating unit 5 that performs a transmission path estimation by using a signal after FFT; an equalizing unit 6 that performs an equalization process based on a transmission-path estimation value calculated by the transmission-path estimating unit 5; a de-permutation unit 7 that de-permutates output data of an equalization processing unit in a frequency axis direction; a de-mapping unit 8 that extracts each user data from output data of the de-permutation unit 7; a demodulating unit 9 that demodulates extracted user data; a de-interleave processing unit 10 that de-interleaves demodulated data; a decoding processing unit 11 that decodes the de-interleaved data; a de-randomizing unit 12 that de-randomizes the decoded data; a data analyzing unit 13 that analyzes the de-randomized data; and a zone-boosting-amount calculating unit 14 that calculates an amount of zone boosting.

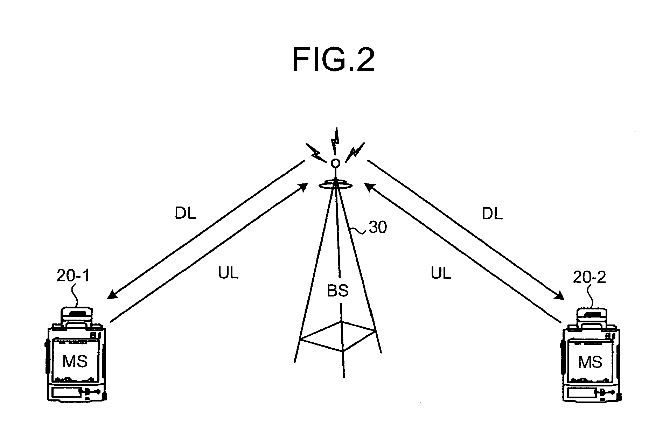

Fig. 2 is a configuration example of a communication system that includes a communication device according to the present embodiment as a mobile station (MS). As shown in Fig. 2, the communication system according to the present embodiment includes MSs 20-1, 20-2, and a base station (BS) 30. In Fig. 2, DL denotes a down link line through which signals are transmitted from the BS 30 to the MSs 20-1, 20-2, and UL denotes an up link line through which signals are transmitted from the MSs 20-1, 20-2 to the BS 30.

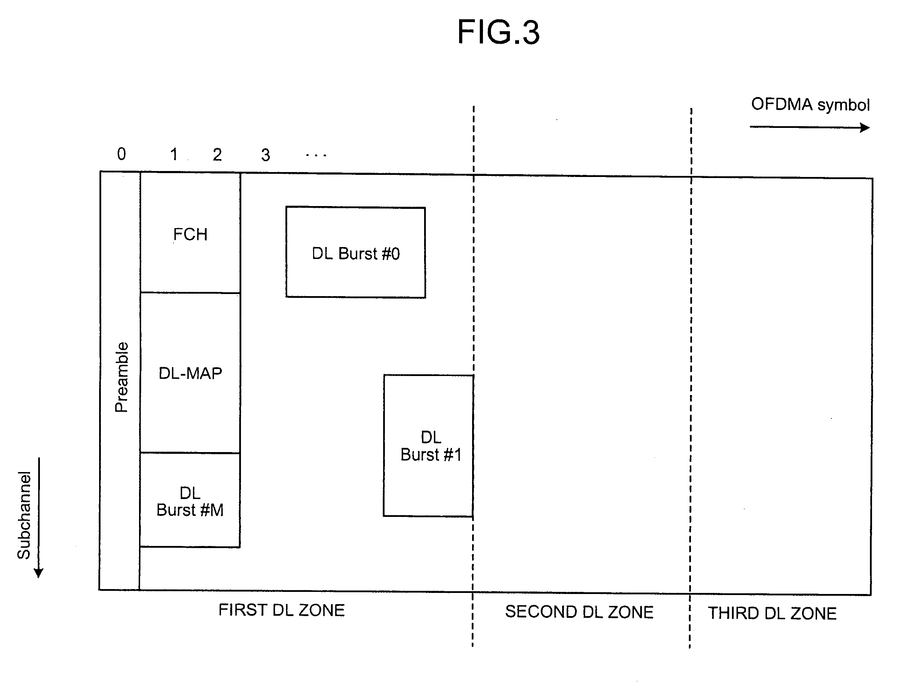

In the communication system according to the present embodiment, communications are assumed to be performed by the OFDMA system. Fig. 3 is an example of a DL sub-frame of the OFDMA system. As shown in Fig. 3, in this DL sub-frame, a preamble is inserted in a 0-th OFDMA symbol, and FCH, DL-MAP, and a DL burst (Burst) are inserted in the first and the second OFDMA symbols. More than one DL bursts can be inserted. Fig. 3 shows an example in which three DL bursts of a DL burst #0, a DL burst #1, and a DL burst #M (M is a natural number) are inserted. In Fig. 3, while DL-MAP is allocated to the first and the second OFDMA symbols, sometimes DL-MAP is also allocated to the third and the subsequent OFDMA symbols when the number of bits is large.

Sub-channels constituting each sub-channel group are assumed to be determined in advance. For example, in the case of the OFDMA of 2048 point FFT in IEEE 802.16, the total number of sub-channels is 60, a sub-channel group #0 is configured by 12 sub-channels, and a sub-channel group #1 is configured by 8 sub-channels.

In the OFDMA system, preamble patterns corresponding to cell ID numbers and segment numbers are allocated to optional segments. There are sub-channel groups that are allocated without exception to respective optional segment numbers. Information as to whether each sub-channel group is allocated to a corresponding segment is contained in FCH.

In the present embodiment, a sub-frame is divided into plural zones. Data and a pilot sub-carrier in each zone are assumed to be subjected to boosting (called zone boosting) unique to the zone. The first DL zone, the second DL zone, and the third DL zone shown in Fig. 3 are examples of the zones of a sub-frame. In the zone boosting, power is changed depending on the determined amount of boosting in each zone. For example, power is doubled when the amount of zone boosting is two.

The amount of zone boosting is determined by a sub-channel group allocated to a corresponding segment. The amount of zone boosting is a numerical value calculated by dividing the total number of sub-channels by the number of allocated sub-channels. For example, in the OFDMA of 2048 point FFT in IEEE 802.16, when a sub-channel group #0 and a sub-channel group #1 are allocated, the total number of allocated sub-channels becomes 12+8=20. Therefore, in this example, the amount of zone boosting becomes 60/20=3, and power is boosted by three times.

An operation of the communication device according to the present embodiment is explained next. First, the antenna 1 receives a signal transmitted from the base station. The synchronization processing unit 2 performs a synchronization process on the signal, and the GI deleting unit 3 deletes a guard interval from the signal after the synchronization process. Next, the FFT unit 4 performs FFT to the signal from which the guard interval is deleted, and outputs the signal after the FFT to the transmission-path estimating unit 5 and the zone-boosting-amount calculating unit 14. The zone-boosting-amount calculating unit 14 calculates an amount of zone boosting as described later. The transmission-path estimating unit 5 estimates a transmission path based on the amount of zone boosting and the signal after the FFT. The equalizing unit 6 performs an equalization process on the signal after the FFT based on the transmission-path estimation value estimated by the transmission-path estimating unit 5.

The de-permutation unit 7 then de-permutates the signal after the equalization process in a frequency axis direction. The de-mapping unit 8 extracts each user data from an output signal output from the de-permutation unit 7, and the demodulating unit 9 performs a demodulation process to the extracted each user data. The de-interleave processing unit 10 de-interleaves the demodulated each user data, and the decoding processing unit 11 decodes the de-interleaved data. The de-randomizing unit 12 de-randomizes the decoded data, and the data analyzing unit 13 analyzes the de-randomized data. In the present embodiment, as one example, the transmission-path estimating unit 5, the equalizing unit 6, the de-permutation unit 7, the de-mapping unit 8, and the demodulating unit 9 constitute demodulating means.

In the transmission path estimation process performed by the transmission-path estimating unit 5, a transmission-path estimation value needs to be applied by correcting a difference of a power value for each zone by zone boosting, when IIR (Infinite Impulse Response) filtering is performed. In the present embodiment, the zone-boosting-amount calculating unit 14 calculates an amount of zone boosting as described later, and outputs the amount of zone boosting to the transmission-path estimating unit 5. The transmission-path estimating unit 5 performs the IIR filtering by correcting power by using the amount of zone boosting. A method of estimating an amount of zone boosting is explained here by taking the first OFDMA symbol as an example. An amount of zone boosting for an OFDMA symbol other than the first OFDMA symbol can be estimated by a similar process. Further, a similar process can be performed by using plural symbols, such as the first and the second symbols, for example.

Information as to which sub-channel group is allocated is contained in FCH. Although an amount of zone boosting can be calculated by using this information, in this case, the amount of zone boosting cannot be calculated until when the analysis of FCH is finished. Therefore, in the present embodiment, the amount of zone boosting is calculated as follows, without using the information of FCH.

In the OFDMA in IEEE 802.16, preamble patterns corresponding to cell ID numbers and segment numbers are allocated to each segment. In the synchronization process performed in the synchronization unit 2, cell ID numbers and segment numbers are obtained by performing preamble detection. Sub-channel groups (hereinafter, essential sub-channel groups) allocated without exception to respective segment numbers are present. In the present embodiment, the zone-boosting-amount calculating unit 14 estimates an amount of zone boosting as follows, by using segment numbers that the synchronization processing unit 2 obtains in the synchronization process.

First, the zone-boosting-amount calculating unit 14 obtains segment numbers from the synchronization processing unit 2, and calculates average power $P_{pilot}$ of pilot sub-carriers included in the essential sub-channel groups corresponding to the obtained segment numbers. Furthermore, the zone-boosting-amount calculating unit 14 obtains valid sub-carriers (sub-carriers to which bit series for preamble are mapped) of preamble based on the segment numbers, and calculates average power $P_{preamble}$ of the valid sub-carriers. While valid sub-carriers are different depending on segment numbers, this relationship is assumed to be held by the zone-boosting-amount calculating unit 14. Zone boosting is not performed to preamble. Therefore, the zone-boosting-amount calculating unit 14 calculates an amount of zone boosting by using Equation (1), where Zb represents an amount of zone boosting, and $\alpha$ represents a correction coefficient:

$$Zb = (\alpha \cdot P_{pilot}) / P_{preamble} \qquad (1)$$

In a state that zone boosting is not performed, there is a difference between the average power of sub-carriers of preamble and the average power of pilot sub-carriers. The correction coefficient $\alpha$ is for correcting this difference. The correction coefficient $\alpha$ is prepared beforehand by measurement, analysis, and the like, and is held in the communication device. Alternatively, the correction coefficient $\alpha$ can be inserted in control data or the like, and can be notified from the base station.

When possible numerical value groups of amounts of zone boosting are known in advance, for example, each numerical value of the numerical value groups is compared with Zb calculated by using Equation (1), and a numerical value Zb' having the smallest difference with respect to Zb can be used as an estimation value of an amount of zone boosting. For example, in the case of the OFDMA of 2048 point FFT in IEEE 802.16, {60/12, 60/20, 60/28, 60/36, 60/24, 60/32, 60/40, 60/48, 60/44, 60/52, 60/60} are possible numerical value groups. When the result obtained by using Equation (1) is Zb=1.52, for example, 60/40=1.5 is a numerical value having the smallest difference with respect to Zb. Therefore, Zb'=1.5 is set as the amount of zone boosting.

In the present embodiment, while the zone-boosting-amount calculating unit 14 obtains segment numbers from the synchronization processing unit 2, and calculates the average power of sub-carries of preamble and the average power of pilot sub-carriers, a method is not limited to this. Alternatively, the synchronization processing unit 2 can calculate the average power of sub-carries of preamble and the average power of pilot sub-carriers, and the zone-boosting-amount calculating unit 14 can receive these average powers, and calculate the amount of zone boosting.

In the present embodiment, while the OFDMA in IEEE 802.16 is explained, not limited to this, when preamble is generated corresponding to segment numbers and when essential sub-channel groups corresponding to segment numbers are present, an amount of zone boosting can be similarly estimated for other OFDMA as well.

As explained above, in the present embodiment, segment numbers are estimated by using a preamble. An amount of zone boosting is calculated by using average power of pilot sub-carriers included in essential sub-channel groups corresponding to the segment numbers, and average power of preamble. Therefore, the IIR filtering process including the correction using the amount of zone boosting can be performed without waiting for completion of analysis of FCH, and the processing delay can be decreased.

According to the conventional method of calculating an amount of zone boosting by using information contained in FCH, while a transmission-path estimation value and a received signal need to be stored in a memory or the like until a completion of analysis of FCH, these can be decreased.

Furthermore, a transmission-path estimation value can be calculated with a high precision by using the calculated amount of zone boosting, and an error rate can be decreased in the equalization process and the decoding process of FCH, DL-MAP. Moreover, correct equalization can be performed when a modulation system having information in an amplitude direction, such as QAM modulation, is applied to FCH, DL-MAP.

Second embodiment.

In a second embodiment, the data analyzing unit 13 of the communication device according to the first embodiment further performs an error check on FCH. A functional configuration of a communication device according to the second embodiment is similar to that of the communication device according to the first embodiment. A configuration of a communication system according to the second embodiment is also similar to that in the first embodiment, and the communication device according to the present embodiment is assumed to operate as the MSs 20-1, 20-2 in Fig. 2. Explanations of configurations and operation similar to those of the first embodiment will be omitted, and parts different from that of the first embodiment, that is, a method of checking correctness of a result of data analysis of FCH is explained.

Because bit series (24 bits) of FCH are duplex, the data analyzing unit 13 determines that FCH is correctly demodulated and correctly decoded when $b(0)=b(24)$, $b(1)=b(25)$, $b(2)=b(27)$, ..., $b(23)=b(47)$ ($b(n)=b(n+24)$) if an output result of the de-randomizing unit 12 is {$b(0)$, $b(1)$, $b(2)$, $b(3)$, ..., $b(47)$}. On the other hand, the data analyzing unit 13 determines that FCH is incorrectly demodulated and incorrectly decoded when $b(n)\#b(n+24)$ for any one of n=0, 1, ..., 23.

Furthermore, information as to whether sub-channel groups are allocated to corresponding segments is inserted in FCH, as explained in the first embodiment. Therefore, the data analyzing unit 13 analyzes the bit series to FCH output from the de-randomizing unit, determines sub-channel groups allocated to corresponding segments, and divides the total number of sub-channels by the number of allocated sub-channel groups, thereby calculating an amount of zone boosting Zbf.

Zb' (numerical value having the smallest difference with respect to Zb among possible amounts of zone boosting) according to the first embodiment is compared with the Zbf. When these values match with each other, it can be determined that a result of data analysis of FCH is correct. When these values do not match with each other, it can be determined that the result of data analysis of FCH is incorrect.

Alternatively, the amount of zone boosting Zb calculated by using Equation (1) according to the first embodiment can be compared with the amount of zone boosting Zbf obtained based on the allocated sub-channel groups contained in FCH. In this case, when a difference between Zb and Zbf is equal to or smaller than a threshold value set in advance, it can be determined that a result of data analysis of FCH is correct. When this difference exceeds the threshold value, it can be determined that the result of data analysis of FCH is incorrect.

As explained above, in the present embodiment, the data analyzing unit 13 calculates the amount of zone boosting Zbf by using the information contained in FCH, and compares the amount of zone boosting Zbf with the amount of zone boosting estimated in the first embodiment. This arrangement makes it possible to determine correctness of a result of data analysis of FCH. Therefore, correctness of a result of data analysis of FCH can be checked more strictly.

Third embodiment.

In a third embodiment, a communication system in which a modulation system of DL-MAP and an encoding ratio and the like are variable is explained. A functional configuration of a communication device according to the third embodiment is similar to that of the communication device according to the first embodiment. A configuration of the communication system according to the third embodiment is also similar to that in the first embodiment, and the communication device according to the present embodiment is assumed to operate as the MSs 20-1, 20-2 in Fig. 2. Hereinafter, explanations of configurations and operation similar to those of the first embodiment will be omitted, and parts different from those of the first embodiment are explained.

In IEEE 802.16, QPSK is applied as a modulation system, and 1/2 is applied as an encoding ratio, for standards.

However, it is advantageous to increase the transmission rate when the communication environment is favorable; because, by increasing the transmission rate, transmission capacity per sub-carrier increases and throughput is improved. In addition, when transmission is performed at a higher transmission rate, an occupied area of DL-MAP becomes small even when the same amount of information is transmitted. Therefore, the idle region can be used to transmit other information (such as DL burst, for example).

DL-MAP is usually allocated to the first and the second OFDMA symbols. However, when the number of transmission bits is large, sometimes DL-MAP is also allocated to the third and the subsequent OFDMA symbols. In the case of a communication device that calculates an amount of zone boosting from the information contained in FCH, the amount of zone boosting cannot be calculated until when data analysis of FCH is finished. However, as described in the first embodiment, the communication device according to the first embodiment can calculate an amount of zone boosting in the process of an own symbol.

Therefore, correct equalization can be performed even when QAM modulation is applied to DL-MAP.

Consequently, in the communication system according to the present embodiment, transmission rates (a modulation system, an encoding system, an encoding ratio or the like) of DL-MAP are set variable, and the base station 30 notifies the information of the transmission rates by using reserve bits of FCH. DL-MAP can be correctly demodulated and correctly decoded by notifying the transmission rates (a modulation system, an encoding system, an encoding ratio or the like) applied to DL-MAP by using the reserve bits of FCH as described above. For example, transmission rates of DL-MAP are notified by relating to a modulation system, an encoding system, and an encoding ratio as follows, by using four bits out of the reserve bits.

"0000": QPSK modulation, convolution code, encoding ratio =1/2

"0001": QPSK modulation, convolution code, encoding ratio =3/4

"0010": 16QAM modulation, convolution code, encoding ratio =1/2

"0011": 16QAM modulation, convolution code, encoding ratio =3/4

"0100": 64QAM modulation, convolution code, encoding ratio =1/2

"0101": 64QAM modulation, convolution code, encoding ratio =3/4

"0110": 64QAM modulation, convolution code, encoding ratio =2/3

In the communication device according to the first embodiment, even when the transmission rate is not known, processes of the transmission-path estimating unit 5, the equalizing unit 6, the de-permutation unit 7, and the de-mapping unit 8 can be conducted. Therefore, a processing delay can be prevented from occurring. When a transmission rate is fixed for a certain period, processes can be performed by using a transmission rate contained in FCH of the last received signal. In this case, all processes can be performed including processes after the demodulating unit 9, without waiting for a result of data analysis of FCH. As a result, effect of preventing a processing delay can be more improved.

In the present embodiment, an example that a modulation system, an encoding system, and an encoding ratio are all variable (selectable from a candidate group determined in advance) for the transmission rates of DL-MAP is explained, however, the configuration is not limited to this. Alternatively, one or two among the three can be set selectable, and selected content can be notified as a transmission rate. For example, when only the encoding ratio is set variable, the base station selects an encoding ratio from a candidate group of encoding ratios set in advance, thereby performing encoding and modulation, and the encoding ratio is notified as a transmission rate.

As explained above, according to the present embodiment, in the communication system that includes the communication device of the first embodiment, transmission rates (a modulation system, an encoding system, an encoding ratio or the like) of DL-MAP are set variable. The base station 30 notifies the information of the transmission rates by using reserve bits of FCH. Therefore, throughput can be improved more than that of the first embodiment.

INDUSTRIAL APPLICABILITY

As described above, a communication device and a communication system of the present invention are useful for a communication system by an OFDMA system, and are especially suitable for a communication system that boosting different in each zone is performed.

**Claims**

1. A communication device that performs communications by an OFDMA system, the communication device comprising:

a zone-boosting-amount calculating unit configured to obtain a segment number calculated in a synchronization process, obtain a sub-channel corresponding to the segment number by referring to a predetermined relationship between sub-channels and segment numbers, and calculate an amount of zone boosting based on average power of a preamble and an average power of pilot sub-carriers included in the sub-channel; and
a demodulating unit configured to estimate a transmission path after correcting a power value of a received signal based on calculated amount of zone boosting, and perform demodulation.

2. The communication device according to claim 1, wherein the zone-boosting-amount calculating unit selects a value having a smallest difference with respect to the calculated amount of zone boosting from among predetermined possible values of amounts of zone boosting, and informs selected value to the demodulating unit.

3. The communication device according to claim 1, wherein the communication device calculates an amount of zone boosting based on information about allocation of sub-channels contained in FCH of a received signal, and compares this amount of zone boosting with the amount of zone boosting calculated by the zone-boosting-amount calculating unit, thereby determining correctness of FCH.

4. The communication device according to claim 2, wherein the communication device calculates an amount of zone boosting based on information about allocation of sub-channels contained in FCH of a received signal, and compares this amount of zone boosting with the amount of zone boosting calculated by the zone-boosting-amount calculating unit, thereby determining correctness of FCH.

5. The communication device according to any one of claims 1 to 4, wherein the communication device performs demodulation of DL-MAP by using DL-MAP modulation information indicating at least one of a modulation system, an encoding system, and an encoding ratio of DL-MAP contained in the received signal.

6. A communication system employing an OFDMA system as a communication method, the communication system including a base station and a mobile station, wherein
the mobile station includes
a zone-boosting-amount calculating unit configured to obtain a segment number calculated in a synchronization process, obtain a sub-channel corresponding to the segment number by referring to a predetermined relationship between sub-channels and segment numbers, and calculate an amount of zone boosting based on average power of a preamble and an average power of pilot sub-carriers included in the sub-channel; and
a demodulating unit configured to estimate a transmission path after correcting a power value of a received signal based on calculated amount of zone boosting, and perform demodulation.

7. The communication system according to claim 6, wherein the zone-boosting-amount calculating unit of the mobile station selects a value having a smallest difference with respect to the calculated amount of zone boosting from among predetermined possible values of amounts of zone boosting, and informs selected value to the demodulating unit.

8. The communication system according to claim 6 or 7, wherein the mobile station calculates an amount of zone boosting based on information about allocation of sub-channels contained in FCH of a received signal, and compares this amount of zone boosting with the amount of zone boosting calculated by the zone-boosting-amount calculating unit, thereby determining correctness of FCH.

9. A communication system employing an OFDMA system as a communication method, the communication system including a base station and a mobile station, wherein
the base station
sets variable at least one item among a modulation system, an encoding system, and an encoding ratio of DL-MAP, selects a modulation system of DL-MAP from among predetermined candidates of modulation systems including QAM when a modulation system is set variable, selects an encoding system of DL-MAP from among predetermined encoding systems when an encoding system is set variable, selects an encoding ratio of DL-MAP from among predetermined candidates of encoding systems and encoding ratios when an encoding ratio is set variable, modulates DL-MAP based on a result of the selection, and transmits DL-MAP modulation information indicating a result of the selection,
the mobile station includes
a zone-boosting-amount calculating unit configured to obtain a segment number calculated in a synchronization process, obtain a sub-channel corresponding to the segment number by referring to a predetermined relationship between sub-channels and segment numbers, and calculate an amount of zone boosting based on average power of a preamble and an average power of pilot sub-carriers included in the sub-channel; and
a demodulating unit configured to estimate a transmission path after correcting a power value of a received signal based on calculated amount of zone boosting, and perform demodulation, and
demodulates DL-MAP by using the DL-MAP modulation information contained in a received signal.

10. The communication system according to claim 9, wherein the mobile station calculates an amount of zone boosting based on information about allocation of sub-channels contained in FCH of a received signal, and compares this amount of zone boosting with the amount of zone boosting calculated by the zone-boosting-amount calculating unit, thereby determining correctness of FCH.

11. The communication system according to claim 9 or 10, wherein the communication system transmits the DL-MAP modulation information by using reserve bits of FCH.

# FIG.1

SYNCHRONIZATION PROCESSING UNIT (2)

ZONE-BOOSTING-AMOUNT CALCULATING UNIT (14)

GI DELETING UNIT (3)

FFT UNIT (4)

TRANSMISSION-PATH ESTIMATING UNIT (5)

EQUALIZING UNIT (6)

DE-PERMUTATION UNIT (7)

DE-MAPPING UNIT (8)

DEMODULATING UNIT (9)

DE-INTERLEAVE PROCESSING UNIT (10)

DECODING PROCESSING UNIT (11)

DE-RANDOMIZING UNIT (12)

DATA ANALYZING UNIT (13)

EP 2 120 376 A1

# FIG.2

# FIG.3

OFDMA symbol

Subchannel

0    1    2    3    ...

Preamble

FCH

DL-MAP

DL Burst #M

DL Burst #0

DL Burst #1

FIRST DL ZONE          SECOND DL ZONE          THIRD DL ZONE

EP 2 120 376 A1

<table>
<tr><td colspan="2" align="center"><b>INTERNATIONAL SEARCH REPORT</b></td><td colspan="2">International application No.<br>PCT/JP2007/054301</td></tr>
</table>

**A. CLASSIFICATION OF SUBJECT MATTER**
*H04J11/00(2006.01)i*

According to International Patent Classification (IPC) or to both national classification and IPC

**B. FIELDS SEARCHED**

Minimum documentation searched (classification system followed by classification symbols)
H04J11/00

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-054866 A (Samsung Electronics Co., Ltd.), 23 February, 2006 (23.02.06), Full text; all drawings & US 2006/0034384 A1 & CN 1734995 A & KR 2006015043 A | 1-11 |
| A | JP 2006-005946 A (Samsung Electronics Co., Ltd.), 05 January, 2006 (05.01.06), Full text; all drawings & EP 1610497 A1 & US 2006/0009228 A1 & CN 1761224 A & KR 2005120519 A | 1-11 |

☐ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
05 June, 2007 (05.06.07)

Date of mailing of the international search report
12 June, 2007 (12.06.07)

Name and mailing address of the ISA/
Japanese Patent Office

Facsimile No.

Authorized officer

Telephone No.

Form PCT/ISA/210 (second sheet) (April 2005)